# EUROPÄISCHE PATENTSCHRIFT

(11) **EP 0 543 142 B1**
(45) Veröffentlichungstag und Bekanntmachung des Hinweises auf die Patenterteilung: **27.12.1996**
(21) Anmeldenummer: 92117572.5
(22) Anmeldetag: 15.10.1992
(51) Int. Cl.: F16D 43/202

(54) **Drehmomentbegrenzungskupplung**
Torque limiting coupling
Accouplement limitateur de couple

(30) Priorität: 16.11.1991 DE 4137829
(43) Veröffentlichungstag der Anmeldung: 26.05.1993
(73) Patentinhaber: GKN Walterscheid GmbH, D-53784 Lohmar (DE)
(72) Erfinder: Kämpf, Klaus, W-5204 Lohmar 1 (DE)
(74) Vertreter: Harwardt, Günther, Dipl.-Ing.

(56) Entgegenhaltungen:
- DE-C- 912 411
- DE-U- 9 206 232
- FR-A- 2 615 256
- US-A- 2 238 583
- US-A- 2 429 091

## Beschreibung

Die Erfindung betrifft eine Drehmomentbegrenzungskupplung, insbesondere im Antriebsstrang zum Antrieb landwirtschaftlicher Geräte oder Maschinen, mit einer Kupplungsnabe und einer auf dieser relativ drehbar gelagerten Kupplungshülse, mit in von der Außenfläche der Kupplungsnabe ausgehenden, nach innen gerichteten, umfangsverteilten Ausnehmungen der Kupplungsnabe verschiebbar angeordneten Mitnehmern, deren Köpfe in Drehmomentübertragungsposition jeweils in eine entsprechende Ausnehmung der gegenüberliegenden Innenfläche der Kupplungshülse eingreifen und in Abschaltposition außer Eingriff zu diesen sind, wobei die Drehachse von Kupplungshülse und Kupplungsnabe parallel zu der Drehmomentübertragungsfläche der Köpfe der Mitnehmer verläuft und der Fuß der Mitnehmer mit zwei Schaltflächen versehen ist, von denen die einen zur Stützung in der Drehmomentübertragungsposition und die anderen zur Stützung in der Abschaltposition durch entsprechende Schaltflächen eines zur Drehmomentübertragungsposition hin federbeaufschlagten und quer zum jeweiligen Mitnehmer in den Ausnehmungen der Kupplungsnabe bewegbaren Schaltnocken beaufschlagt sind und die der Drehmomentübertragung dienenden Schaltflächen unter einem Winkel zur Mittenachse des jeweiligen Mitnehmers verlaufen, der größer ist, als der Winkel der Schaltfläche für die Abschaltposition und wobei die Schaltflächen der Mitnehmer und der jeweils zugehörigen Schaltnocken gegengleich ausgebildet sind.

Eine derartige Drehmomentbegrenzungskupplung ist in der DE-PS 912 411 beschrieben. Die Drehmomentbegrenzungskupplung ist zur Übertragung von Drehmoment und auch zur Abschaltung in beiden möglichen Drehrichtungen gestaltet. Hierzu weisen die als zylindrische Grundkörper gestalteten Mitnehmer an ihrer Kopffläche zwei Schrägflächen auf, die in entsprechend schräg verlaufende Flächen aufweisende Ausnehmungen der Kupplungshülse eingreifen. Nach innen hin sind die Mitnehmer ebenfalls mit schrägen Flächen versehen, welche jeweils von quer zu den Mitnehmern bewegbaren Schaltnocken beaufschlagt werden. Die Schaltnocken sind jeweils von einer Feder aufeinanderzu in Richtung auf die Schaltflächen der Mitnehmer beaufschlagt. In der abgeschalteten Position stützen sich die Schaltnocken mit parallel zu der Zylinderfläche verlaufenden Flächen an der Zylinderfläche der Mitnehmer ab. Eine Wiedereinschaltung ist durch Eingriff von außen möglich. Hierzu dient ein Schaltring, der über eine Schlitzsteuerung an den Mitnehmern angreift und diese in die Drehmomentübertragungsposition zurückbewegt. Bei einer solchen Gestaltung unterliegen die Mitnehmer bei der Drehmomentübertragung einer Kippbewegung, und zwar um eine Achse durch die Mittenachse der Mitnehmer, welche parallel zur Drehachse der Drehmomentbegrenzungskupplung verläuft. Da die Federkräfte, die von den Schaltnocken ausgeübt werden, sich gegenseitig aufheben, können diese keinen stabilisierenden Beitrag leisten.

Die Kippbewegung führt zu Kantenpressungen zwischen der von den jeweiligen Mitnehmern in Drehmomentübertragungsrichtung jeweils beaufschlagten Kante der Ausnehmungen zu der Außenfläche der Kupplungsnabe hin. Dies führt zu einem Ausschlagen der Ausnehmung bzw. zum Verschleiß der Mitnehmer.

Darüberhinaus baut sich ein Aufwurf auf, der die Reibung zwischen der Außenfläche der Kupplungsnabe und der Innenfläche der Kupplungshülse erhöht. Insgesamt resultiert hieraus, daß die Ansprechgenauigkeit verringert wird und darüberhinaus mit fortschreitendem Verschleiß eine Überbeanspruchung eintreten kann.

Der Erfindung liegt die Aufgabe zugrunde, eine Drehmomentbegrenzungskupplung zu schaffen, bei der auf die Mitnehmer wirkende Kippmomente bei Drehmomentübertragung weitestgehend vermieden werden.

Diese Aufgabe wird erfindungsgemäß dadurch gelöst, daß die Drehmomentübertragungsflächen der Köpfe der Mitnehmer und die Schaltflächen der Füße der Mitnehmer jeweils ein und derselben Seite der Mitnehmer im Umfangsinne zugehören.

Von Vorteil bei dieser Ausbildung ist, daß die Kraft der die Schaltnocken und die Mitnehmer beaufschlagenden Federanordnungen der Kipptendenz der Mitnehmer, resultierend aus der Drehmomentübertragung, entgegenwirken. Daraus resultiert außerdem ein auf die Dauer verbessertes Schaltverhalten der Drehmomentbegrenzungskupplung.

In Konkretisierung der Erfindung ist des weiteren vorgesehen, daß die Drehmomentübertragungsfläche und die Schaltfläche, zu der die Schaltnocken beaufschlagenden Federanordnung hin ausgerichtet sind. Bei einer solchen Gestaltung sind die Federn als Druckfedern ausgebildet.

Eine besonders günstige Gestaltung ergibt sich, wenn die Mitnehmer im Querschnitt rechteckig ausgebildet sind. Hieraus resultieren große Anlageflächen, die zu einer verbesserten Drehmomentabstützung im Verhältnis der nach dem Stand der Technik vorgesehenen zylindrischen Mitnehmer führen.

Vorzugsweise ist je Mitnehmer ein Schaltnocken, dessen Länge in etwa der des zugehörigen Mitnehmers entspricht und die Nebeneinanderanordung von mehreren, diesen beaufschlagende Federn vorgesehen.

Eine besonders günstige Abstützung ergibt sich dann, wenn die der Abstützung der Mitnehmer in der Drehmomentübertragungsposition dienenden Schaltflächen der Mitnehmer unter einem Winkel von 45° bis 70°, insbesondere 60°, zur Mittenachse der Mitnehmer verlaufen. Für den Fall einer im Querschnitt rechteckige Ausbildungestaltung der Mitnehmer, ist die Mittenachse die Mittenebene der Mit- nehmer.

Für die der Stützung der Mitnehmer in der Abschaltposition dienenden Schaltflächen ist bevorzugt vorgesehen, daß diese unter einem Winkel von 14° bis 20°, insbesondere 17°, zur Mittenachse der Mitnehmer verlaufen.

Wichtig bei einer Drehmomentbegrenzungskupplung ist das Verhalten beim Wiedereinschalten der Kupplung nach dem Freischalten aufgrund einer Überlast. Ein solches selbsttätiges Wiedereinschalten ist bei der zum Stand der Technik beschriebenen Ausführungsform nur durch Eingriff von außen möglich. Die vorbeschriebene Anordnung der Schaltflächen für die Stützung der Mitnehmer in der Abschaltposition erlaubt jedoch ein selbsttätiges Wiedereinschalten unter der Kraft der Federn. Um dieses Einschaltverhalten zu verbessern, ist nach der Erfindung vorgesehen, daß die Mittenachse der Mitnehmer von einer dazu parallelen Ebene, die die Drehachse enthält, versetzt ist, so daß die Ebene zwischen der Mittenachse und der Drehmomentübertragungsfläche angeordnet ist.

Bei dieser Anordnung, wird der Weg, den die Mitnehmer zur Erreichung der Drehmomentübertragungsposition zurücklegen müssen, verlängert, so daß bei einer niedrigen Drehzahl ein Überführen in die Ausnehmungen eintritt. Dieses Verhalten kann alternativ oder auch additiv zu dieser Lösung auch dadurch erreicht werden, daß zwischen der mit der Drehmomentübertragungsfläche der Mitnehmer zusammenarbeitenden Stützfläche und der Innenfläche der Kupplungshülse eine Fase angeordnet ist.

Das Verhalten kann auch noch dadurch verbessert werden, daß die Kopffläche des Mitnehmers auf der der Stützfläche abgewandten Seite mit einer Fase versehen ist.

Ein bevorzugtes Ausführungsbeispiel der Erfindung ist in der Zeichnung schematisch dargestellt.

Es zeigt:
- Figur 1: eine Übersichtszeichnung bezüglich einer Antriebsanordnung mit einem Traktor und einem davon angetriebenen Gerät in der Draufsicht,

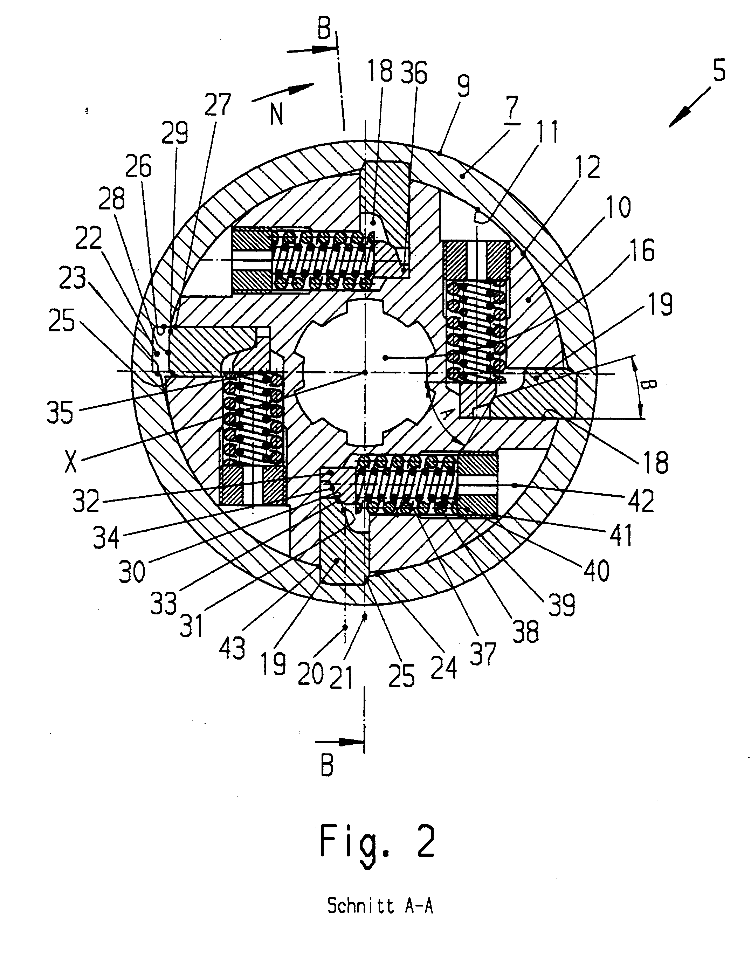

- Figur 2: einen Querschnitt (Schnitt A-A von Figur 3) durch eine erfindungsgemäße Drehmomentbegrenzungskupplung und
- Figur 3: einen Längsschnitt durch die Kupplung gemäß Schnittlinie B-B von Figur 2.

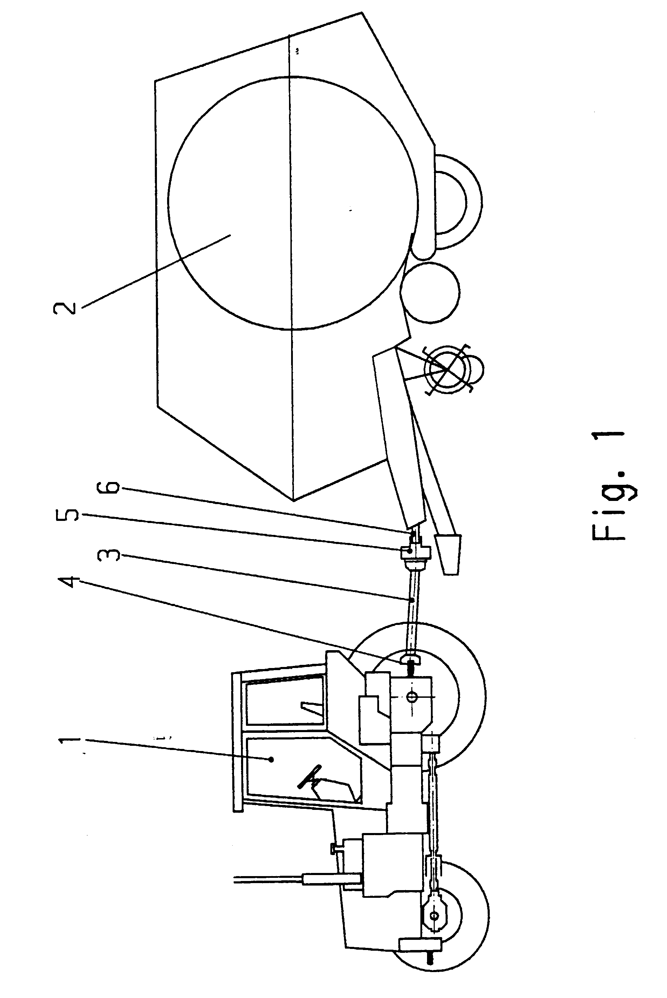

Aus Figur 1 ist ein Traktor 1 ersichtlich, dem ein Gerät 2 angehängt ist. Dieses Gerät 2 wird von der Zapfwelle 4 über die Gelenkwelle 3 angetrieben. In den Antriebsstrang ist eine Drehmomentbegrenzungskupplung 5 eingeschaltet.

Die Drehmomentbegrenzungskupplung 5 ist auf den Antriebszapfen 6 des Gerätes 2 aufgesteckt.

Die Drehmomentbegrenzungskupplung 5 ist im Einzelnen anhand der Zeichnungsfiguren 2 und 3 beschrieben.

Die Drehmomentbegrenzungskupplung 5 weist eine Kupplungshülse 7 auf, welche aus einem Flansch 8 und dem im wesentlichen zylindrischen Gehäusemantel 9 besteht. Flansch 8 und Gehäusemantel 9 sind drehfest miteinander, beispielsweise durch Schweißung, verbunden. Der Flansch 8 dient beispielsweise zum Anschluß an die das Gerät 2 gemäß Figur 1 treibende Gelenkwelle 3. Sie stellt also das treibende Kupplungsteil dar. Die Kupplungsnabe 10 ist relativ drehbar zur Kupplungshülse 7 in deren Bohrung 11 mit der Außenfläche 12 aufgenommen. Die Axialsicherung der Kupplungsnabe 10 in der Kupplungshülse 7 erfolgt durch Anlaufen an die Innenfläche des Flansches 8 und durch die in den Gehäusemantel 9 eingesetzte Anlaufscheibe 13, welche über einen Sicherungring 14 fixiert ist. Die Abdichtung zwischen Kupplungshülse 7 einerseits und Kupplungsnabe 10 andererseits erfolgt über die Dichtung 15. Die Kupplungsnabe 10 ist mit einer Aufsteckbohrung 16 versehen, die ein Vielkeilprofil aufweist. Ferner ist die Kupplungsnabe 10 aus der Kupplungshülse 7 axial herausgeführt. Auf dem herausgeführten Ende ist ein Verschluß 17 angeordnet, der zur Festlegung der Drehmomentbegrenzungskupplung 5 beispielsweise auf dem Antriebszapfen 6 des Gerätes 2 gemäß Figur 1 dient.

Die Kupplungsnabe 10 ist von ihrer Außenfläche 12 ausgehend mit Ausnehmungen 18 versehen. Diese Ausnehmungen 18 können auch als parallel zur Drehachse X der Drehmomentbegrenzungskupplung 5 verlaufende Schlitze gestaltet sein. Die Mittenachse bzw. Mittenebene der Ausnehmungen 18 ist mit 20 bezeichnet und zu einer Ebene 21, welche die Drehachse X beinhaltet, parallel versetzt. In den umfangsverteilten Ausnehmungen 18 sind flache, schieberartig gestaltete Mitnehmer 19 radial verschiebbar angeordnet. Es sind beim dargestellten Ausführungsbeispiel insgesamt 4 solcher Mitnehmer 19 auf dem Umfang der Kupplungsnabe 10 verteilt angeordnet. Die Mitnehmer 19 weisen an ihrem der Innenfläche 11 der Kupplungshülse 7 zugewandten Kopfabschnitt eine in Drehmomentübertragungsrichtung N der Kupplungshülse 7 hinten liegende Drehmomentübertragungsfläche 25 auf, welche unter einem Winkel zu der die Mittenachse 20 enthaltenen Ebene steht. Die dazu entgegengesetzte Fläche der Mitnehmer 19 ist die Rückfläche 27. Die Mitnehmer 19 greifen mit diesen beiden Flächen in der Drehmomentübertragungsposition in Ausnehmungen 22 in der Innenfläche 11 der Kupplungshülse 7 ein. Die Ausnehmungen 22 weisen jeweils eine gleichgerichtet zur Drehmomentübertragungsfläche 25 verlaufende Stützfläche 23 auf. Die Stützfläche 23 ist freigestellt, d.h. sie geht mit einer Fase 24 in die Innenfläche 11 der Kupplungshülse 7 über. Der Stützfläche 23 liegt die Seitenfläche 26 gegenüber. Die Ausnehmung 22 dient zur Abstützung der Rückfläche 27 der Mitnehmer 19 gegen Rückdrehung. Ausgehend von der Kopffläche 28 der Mitnehmer 19 ist zur Rückfläche 27 ebenfalls eine Fase 29 vorgesehen. Die beiden Fasen 24,29 und auch der Versatz der Mitnehmer 19 von der Radialebene 21 weg, bewirken ein verzögertes Einschalten der Mitnehmer 19 und Überführen in die Drehmomentübertragungsposition, da, wie aus der Zeichnung erkenntlich, der Weg, den die Mitnehmer 19 für das Einrasten in die Ausnehmung 22 zurücklegen müssen, gegenüber einer Anordnung, bei der die Mittenachse 20 mit der Radialebene 21 zusammenfällt, verlängert wird.

Die Mitnehmer 19 werden durch federbeaufschlagte Schaltnocken 32 in die Drehmomentübertragungsposition gedrängt. Es ist erkennbar, daß die Stellachse 42 der Schaltnocken 32 etwa rechtwinklig zur Mittenachse 20 der Mitnehmer 19 verläuft. Jeder Schaltnocken 32 ist ebenfalls als eine Art Leiste ausgebildet und weist eine Anlagefläche 35 auf, an der sich zwei ineinanderangeordnete Druckfedern 38,39 mit ihrem einem Ende abstützen. Die Druckfedern 38,39 sind in einem Durchbruch 37 der Kupplungsnabe 10 aufgenommen. Sie stützen sich mit ihrem anderen Ende an einer der Stirnflächen der Verschlußschraube 40 ab, die in eine Gewindebohrung 41 der Kupplungsnabe 10 eingeschraubt ist. Zu der Federanordnung hinweisend sind jeweils sowohl die Drehmomentübertragungsflächen 25 der Mitnehmer 19 als auch deren im Fußbereich angeordneten Schaltflächen 30,31 ausgerichtet. Die Schaltfläche 30 der Mitnehmer 19 dient zur Abstützung des zugehörigen Mitnehmers 19 in der Drehmomentübertragungsposition, d.h. der Position, in der die Drehmomentübertragungsfläche 25 in Anlage zur Stützfläche 23 der Ausnehmung 22 der Kupplungshülse 7 ist. In dieser Stellung ragen die Mitnehmer 19 über die Außenfläche 12 der Kupplungsnabe 10 hervor. Die Schaltfläche 30 zur Stützung in der Drehmomentübertragungsposition verläuft gegenüber der Mittenachse 20 unter dem Winkel A geneigt. Dieser beträgt vorzugsweise 60°. Der Winkel ist abhängig vom Übersetzungsverhältnis zwischen der von den Federn 38,39 aufgebrachten Kraft und der Neigung der Drehmomentübertragungsfläche 25 und dem gewünschten Abschaltdrehmoment. Die Schaltfläche 30 wird von der Schaltfläche 33 des Schaltnockens 32 beaufschlagt. Diese ist dazu gegengleich ausgebildet. Sie verläuft unter dem gleichen Neigungswinkel wie die Schaltfläche 30.

Bei Überschreiten des vorbestimmten Drehmomentes weichen die Mitnehmer 19 radial nach innen aus, wobei gleichzeitig die Schaltnocken 32 gegen die Kraft der Federn 38,39 verschoben werden. Die Verschiebung erfolgt soweit, bis die der Abstützung in der Abschaltposition dienenden Schaltflächen 31 der Mitnehmer 19 zur Anlage an den entsprechenden Gegenflächen, die als Schaltflächen 34 dem Schaltnocken 32 zugeordnet sind kommen. Die Schaltflächen 31 und 34 verlaufen bezüglich der Mittenachse 20 unter einem Winkel, der mit B bezeichnet ist und etwa zwischen 14° und 20° beträgt. Vorzugsweise beträgt der Winkel B 17°. Der Winkel ist für die Wiedereinschaltung maßgebend. Hierdurch soll gewährleistet sein, daß unter der Kraft der Federn 38,39 eine Überführung der Mitnehmer 19 wieder in die eingerastete Position gegenüber den Ausnehmungen 22 erfolgt. Der Winkel B muß also größer sein als der Reibwinkel.

In der radial inneren Position, d.h. in der Abschaltposition, werden die Mitnehmer 19 durch den Ansatz 36 an den Schaltnocken 32 gegen weiteres Bewegen nach innen gehindert.

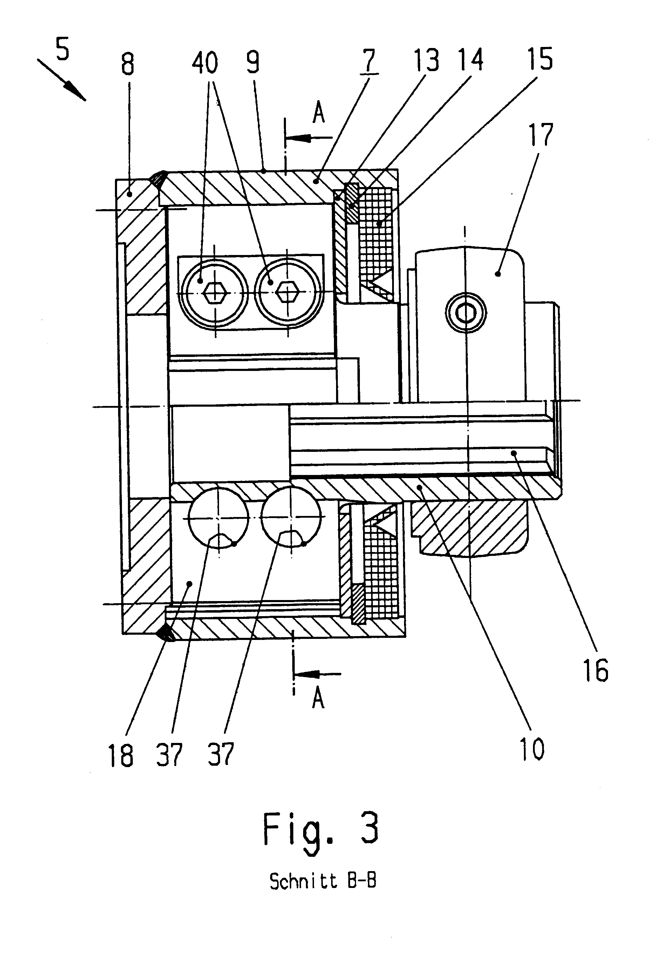

Aus Figur 3 ist erkennbar, daß zur Beaufschlagung jedes Mitnehmers 19 zwei Federanordnungen nebeneinander getroffen sind. Aus Figur 3 unten sind die beiden nebeneinander angeordneten Durchbrüche 37 erkennbar, die zur Aufnahme der Federn 38,39 dienen. Zur Abstützung des Drehmomentes bei Antrieb der Kupplungshülse 7 in Antriebsdrehrichtung N über die Drehmomentübertragungsfläche 25 wird um die Kante 43 am Übergang zwischen Außenfläche 12 der Kupplungsnabe und der zugehörigen Ausnehmung 18 ein Kippmoment eingeleitet.

Bei der getroffenen Anordnung wirkt die Kraft der Druckfedern 38,39 über die Schaltnocken 32 dieser Kippbewegung entgegen, so daß eine verbesserte Krafteinleitung erfolgt. Darüberhinaus wird durch die großflächige Ausbildung der Rückfläche 37 eine verbesserte Krafteinleitung erzielt. Durch das von den Druckfedern 38,39 und die Schaltnocken 32 auf die Mitnehmer 19 eingeleitete Gegenmoment wird die Kante 43 nur gering belastet, so daß es nicht zu Verformungen kommen kann.

### Bezugszeichenliste

- 1: Traktor
- 2: Gerät
- 3: Gelenkwelle
- 4: Zapfwelle
- 5: Drehmomentbegrenzungskupplung
- 6: Antriebszapfen
- 7: Kupplungshülse
- 8: Flansch
- 9: Gehäusemantel
- 10: Kupplungsnabe
- 11: Innenfläche/Bohrung der Kupplungshülse
- 12: Außenfläche der Kupplungsnabe
- 13: Anlaufscheibe
- 14: Sicherungsring
- 15: Dichtung
- 16: Aufsteckbohrung
- 17: Verschluß
- 18: Ausnehmung
- 19: Mitnehmer
- 20: Mittenachse/Mittenebene
- 21: Ebene
- 22: Ausnehmung
- 23: Stützfläche
- 24: Fase
- 25: Drehmomentübertragungsfläche
- 26: Seitenfläche
- 27: Rückfläche
- 28: Kopffläche
- 29: Fase
- 30: Schaltfläche des Mitnehmers für Drehmomentübertragungsposition
- 31: Schaltfläche des Mitnehmers für Abschaltposition
- 32: Schaltnocken
- 33: Schaltfläche des Schaltnockens für Drehmomentübertragungsposition
- 34: Schaltfläche des Schaltnockens für Abschaltposition
- 35: Anlagefläche
- 36: Ansatz
- 37: Durchbruch
- 38,39: Druckfedern
- 40: Verschlußschraube
- 41: Gewindebohrung
- 42: Stellachse
- 43: Kante
- A: Winkel der Schaltfläche für Drehmomentübertragungsposition
- B: Winkel der Schaltfläche für Abschaltposition
- X: Drehachse

## Patentansprüche

1. Drehmomentbegrenzungskupplung, insbesondere im Antriebsstrang zum Antrieb landwirtschaftlicher Geräte (2) oder Maschinen, mit einer Kupplungsnabe (10) und einer auf dieser relativ drehbar gelagerten Kupplungshülse (7), mit in von der Außenfläche (12) der Kupplungsnabe (10) ausgehenden, nach innen gerichteten, umfangsverteilten Ausnehmungen (18) der Kupplungsnabe (10) verschiebbar angeordneten Mitnehmern (19), deren Köpfe in Drehmomentübertragungsposition jeweils in eine entsprechende Ausnehmung (22) der gegenüberliegenden Innenfläche (11) der Kupplungshülse (7) eingreifen und in Abschaltposition außer Eingriff zu diesen sind, wobei die Drehachse (X) von Kupplungshülse (7) und Kupplungsnabe (10) parallel zu der Drehmomentübertragungsfläche (25) der Köpfe der Mitnehmer (19) verläuft und der Fuß der Mitnehmer (19) mit zwei Schaltflächen (30,31) versehen ist, von denen die einen (30) zur Stützung in der Drehmomentübertragungsposition und die anderen (31) zur Stützung in der Abschaltposition durch entsprechende Schaltflächen (33,34) eines zur Drehmomentübertragungsposition hin federbeaufschlagten und quer zum jeweiligen Mitnehmer (19) in den Ausnehmungen (18) der Kupplungsnabe (10) bewegbaren Schaltnocken (32) beaufschlagt sind und die der Drehmomentübertragung dienenden Schaltflächen (30;33) unter einem Winkel (A) zur Mittenachse (20) des jeweiligen Mitnehmers (19) verlaufen, der größer ist, als der Winkel (B) der Schaltfläche (31;34) für die Abschaltposition und wobei die Schaltflächen (30,33;31,34) der Mitnehmer (19) und der jeweils zugehörigen Schaltnocken (32) gegengleich ausgebildet sind,
dadurch gekennzeichnet,
daß die Drehmomentübertragungsflächen (25) der Köpfe der Mitnehmer (19) und die Schaltflächen (30) der Füße der Mitnehmer (19) jeweils ein und derselben Seite der Mitnehmer (19) im Umfangsinne zugehören.

2. Drehmomentübertragungskupplung nach Anspruch 1,
dadurch gekennzeichnet,
daß die Drehmomentübertragungsflächen (19) und die Schaltflächen (30,31) zu der die Schaltnocken (32) beaufschlagenden Federanordungen (38,39) hin ausgerichtet sind.

3. Drehmomentbegrenzungskupplung nach Anspruch 1,
dadurch gekennzeichnet,
daß die Mitnehmer im Querschnitt rechteckig ausgebildet sind.

4. Drehmomentbegrenzungskupplung nach einem der Ansprüche 1 bis 3,
dadurch gekennzeichnet,
daß je Mitnehmer (19) ein Schaltnocken (32) und in Nebeneinanderanordnung mehrere diesen beaufschlagende Federn (38,39) vorhanden sind.

5. Drehmomentbegrenzungskupplung nach einem der Ansprüche 1 bis 4,
dadurch gekennzeichnet,
daß die der Stützung der Mitnehmer (19) in der Drehmomentübertragungsposition dienenden Schaltflächen (30) der Mitnehmer (19) unter einem Winkel (A) von 45° bis 70°, insbesondere 60°, zur Mittenachse (20) der Mitnehmer (19) verlaufen.

6. Drehmomentbegrenzungskupplung nach Anspruch 1,
dadurch gekennzeichnet,
daß die der Stützung der Mitnehmer (19) in der Abschaltposition dienenden Schaltflächen (31) der Mitnehmer (19) unter einem Winkel (B) von 14° bis 20°, insbesondere 17°, zur Mittenachse (20) der Mitnehmer (19) verlaufen.

7. Drehmomentbegrenzungskupplung nach einem der Ansprüche 1 bis 6,
dadurch gekennzeichnet,
daß die Mittenachse (20) der Mitnehmer (19) von einer dazu parallelen Ebene, die die Drehachse (X) enthält, versetzt ist, so daß die Ebene (21) zwischen der Mittenachse (20) und der Drehmomentübertragungsfläche (25) angeordnet ist.

8. Drehmomentbegrenzungskupplung nach einem der Ansprüche 1 bis 6,
dadurch gekennzeichnet,
daß zwischen der mit der Drehmomentübertragungsfläche (25) der Mitnehmer (19) zusammenarbeitende Stützfläche (23) und der Innenfläche (11) der Kupplungshülse (7) eine Fase (24) angeordnet ist.

9. Drehmomentbegrenzungskupplung nach einem der Ansprüche 1 bis 8,
dadurch gekennzeichnet,
daß die Kopffläche (28) der Mitnehmer (19) auf der der Stützfläche (25) abgewandten Seite mit einer Fase (29) versehen ist.

## Claims

1. A torque limiting coupling, especially in the driveline for driving agricultural implements or machinery, having a coupling hub (10) and a coupling sleeve (7) relatively rotatably supported thereon, having driving elements (19) which are movably arranged in inwardly directed, circumferentially distributed coupling hub recesses (18) starting from the outer face (12) of the coupling hub (10) and whose heads, in the torque transmitting position, each engage a corresponding recess (22) of the opposed inner face (11) of the coupling sleeve (7) and, in the disconnected position, are disengaged therefrom, with the rotational axis (X) of the coupling sleeve (7) and coupling hub (10) extending parallel to the torque transmitting faces (25) of the heads of the driving elements (19) and with the base of the driving elements (19) being provided with two switching faces (30, 31) of which the one set (30), for the purpose of being supported in the torque transmitting position and the other set (31), for the purpose of being supported in the disconnected position, being loaded by corresponding switching faces (33, 34) of a switching cam (32) which is spring-loaded towards the torque transmitting position and movable transversely to the respective driving element (19) in the recesses (18) of the coupling hub (10) and with the switching faces (30; 33) serving torque transmitting purposes extending at an angle (A) relative to the central axis (20) of the respective driving element (19), which angle (A) is greater than the angle (B) of the switching face (31,; 34) for the disconnected position and with the switching faces (30, 33; 31, 34) of the driving elements (19) and of the associated switching cams (32) corresponding to one another,
characterised in
that the torque transmitting faces (25) of the heads of the driving elements (19) and the switching faces of the bases of the driving elements (19) are each associated with one and the same side of the driving elements (19) in the circumferential direction.

2. A torque transmitting coupling according to claim 1,
characterised in
that the torque transmitting faces (19) and the switching faces (30, 31) are aligned towards the spring assemblies (38, 39) loading the switching cams (32).

3. A torque limiting coupling according to claim 1,
characterised in
that the driving elements comprise a rectangular cross-section.

4. A torque limiting coupling according to any one of claims 1 to 3,
characterised in
that per driving element (19) there are provided one switching cam (32) and a plurality of springs (38, 39) loading same and being arranged side by side.

5. A torque limiting coupling according to any one of claims 1 to 4,
characterised in
that the switching faces (30) of the driving elements (19) serving to support the driving elements (19) in the torque transmitting position extend at an angle (A) of 45° to 70°, especially 60°, relative to the central axis (20) of the driving elements (19).

6. A torque limiting coupling according to claim 1,
characterised in
that the switching faces (31) of the driving elements (19) serving to support the driving elements (19) in the disconnected position extend at an angle (B) of 14° to 20°, especially 17°, relative to the central axis (20) of the driving elements (19).

7. A torque limiting coupling according to any one of claims 1 to 6,
characterised in
that the central axis (20) of the driving elements (19) is offset from a plane which extends parallel thereto and contains the rotational axis (X), so that the plane (21) is arranged between the central axis (20) and the torque transmitting face (25).

8. A torque limiting coupling according to any one of claims 1 to 6,
characterised in
that between the supporting face (23) cooperating with the torque transmitting face (25) of the driving elements (19) and the inner face (11) of the coupling sleeve (7), there is arranged a chamfer (24).

9. A torque limiting coupling according to any one of claims 1 to 8,
characterised in
that on the side facing away from the supporting face (25), the head face (28) of the driving elements (19) is provided with a chamfer (29).

## Revendications

1. Embrayage limiteur de couple, intercalé en particulier dans une chaîne cinématique pour l'entraînement d'appareils ou machines agricoles (2), comprenant un moyeu d'embrayage (10) et un manchon d'embrayage (7) monté mobile en rotation par rapport au moyeu, des clavettes (19) agencées mobiles en translation dans des évidements (18) du moyeu d'embrayage (10), partent de la surface extérieure (12) du moyeu d'embrayage (10), sont dirigés vers l'intérieur et répartis sur la circonférence, clavettes dont les têtes sont engagées respectivement dans des évidements (22) correspondants de la surface intérieure opposée (11) du manchon d'embrayage (7) dans la position de transmission du couple et sont dégagés de la prise avec ces évidements dans la position débrayée, l'axe de rotation (X) du manchon d'embrayage (7) et du moyeu d'embrayage (10) s'étendant parallèlement à la surface de transmission du couple (25) des têtes des clavettes (19) et le pied des clavettes (19) étant muni de deux surfaces de commande (30, 31) dont les unes (30) sont attaquées, pour donner appui dans la position de transmission du couple et les autres (31) pour donner appui dans la position débrayée, par des surfaces de commande correspondantes (33, 34) appartenant à une came de commande (32) sollicitée élastiquement vers la position de transmission du couple et montée mobile transversalement aux clavettes (19) correspondantes dans les évidements (18) du moyeu d'embrayage (10), et les surfaces de commande (30 ; 33) qui servent à la transmission du couple forment avec l'axe médian (20) des clavettes (19) correspondantes un angle (A) qui est plus grand que l'angle (B) de la surface de commande (31 ; 34) pour la position débrayée, les surfaces de commande (30, 33 ; 31,34) des clavettes (19) et des cames de commande (32) respectives étant identiques mais opposées,
caractérisé
en ce que les surfaces de transmission du couple (25) des têtes des clavettes (19) et les surfaces de commande (30) des pieds des clavettes (19) appartiennent toutes à un seul et même côté des clavettes (19), considéré dans le sens de la circonférence.

2. Embrayage limiteur de couple selon la revendication 1,
caractérisé
en ce que les surfaces de transmission du couple (25) et les surfaces de commande (30, 31) sont dirigées vers les dispositifs à ressort (38, 39) qui sollicitent les cames de commande (32).

3. Embrayage limiteur de couple selon la revendication 1,
caractérisé
en ce que les clavettes sont de forme rectangulaire en section transversale.

4. Embrayage limiteur de couple selon une des revendications 1 à 3,
caractérisé
en ce qu'il est prévu, pour chaque clavette (19), une came de commande (32) et plusieurs ressorts (38, 39) disposés les uns à côté des autres et qui sollicitent cette clavette.

5. Embrayage limiteur de couple selon une des revendications 1 à 4,
caractérisé
en ce que les surfaces de commande (30) des clavettes (19) qui servent à donner appui aux clavettes (19) dans la position de transmission du couple forment un angle (A) de 45° à 70°, notamment de 60°, avec l'axe médian (20) des clavettes (19).

6. Embrayage limiteur de couple selon la revendication 1,
caractérisé
en ce que les surfaces de commande (31) des clavettes (19) qui servent à donner appui aux clavettes (19) dans la position débrayée forment un angle (B) de 14° à 20°, en particulier de 17°, avec l'axe médian (20) des clavettes (19).

7. Embrayage limiteur de couple selon une des revendications 1 à 6,
caractérisé
en ce que l'axe médian (20) des clavettes (19) est déporté par rapport à un plan, parallèle à cet axe, qui contient l'axe de rotation (X), de sorte que le plan (21) est situé entre l'axe médian (20) et la surface de transmission du couple (25).

8. Embrayage limiteur de couple selon une des revendications 1 à 6,
caractérisé
en ce qu'un chanfrein (24) est prévu entre la surface d'appui (23) qui coopère avec la surface de transmission du couple (25) des clavettes (19) et la surface intérieure (11) du manchon (7) de l'embrayage.

9. Embrayage limiteur de couple selon une des revendications 1 à 8,
caractérisé
en ce que la surface de tête (28) des clavettes (19) est munie d'un chanfrein (29) sur le côté qui est le plus éloigné de la surface d'appui (25).
